# EUROPÄISCHE PATENTANMELDUNG

(11) **EP 1 170 224 A2**
(43) Veröffentlichungstag der Anmeldung: **09.01.2002**
(21) Anmeldenummer: 01116435.7
(22) Anmeldetag: 06.07.2001
(51) Int. Cl.: B65D 75/00

(54) **Verpackung**

(30) Priorität: 07.07.2000 DE 10032615; 26.06.2001 DE 10130769
(71) Anmelder: CFS GmbH Kempten, 87437 Kempten (DE)
(72) Erfinder: Dold, Jochen, 87437 Kempten (DE)
(74) Vertreter: Kutzenberger, Helga, Dr.

(57) **Zusammenfassung**

Die Erfindung betrifft eine Verpackung, insbesondere einen Beutel oder Teile der Verpackung aus wärmeschrumpfendem Kunststoffmaterial. An der Verpackung ist eine Siegellinie vorgesehen, an welcher zwei Folienstücke der Verpackung durch Verschweißung miteinander verbunden sind. Das Folienmaterial ist in einem schmalen Bereich entlang der Siegellinie um weniger als 5% seiner Abmessungen geschrumpft.

## Beschreibung

Die Erfindung betrifft eine Verpackung, insbesondere einen Beutel oder Teile der Verpackung aus wärmeschrumpfendem Kunststofffolienmaterial.

Insbesondere im Bereich der Lebensmittelindustrie ist es bekannt, Lebensmittelgüter wie Schinken, Käse, aufgeschnittene Ware und so weiter in Kunststoffbeuteln einzulegen und diese zu verschweißen.

Die Verpackung ist aus einem wärmeschrumpfenden Kunststofffolienmaterial gebildet, wobei diese Ausgestaltung erlaubt, daß die Verpackung, wenn diese zum Beispiel in einem Hitzebad eingelegt wird, so sehr schrumpft, daß die Verpackung eng an dem zu verpackenden Gut anliegt. Solche Verpackungen sind nicht nur im Lebensmittelbereich, wie sie zum Beispiel in der Auslegeware im Kühlbereich bekannt sind, anzutreffen, sondern sie sind auch in vielen anderen Bereichen des täglichen Lebens, aber auch im Bereich der Technik (zum Beispiel zum Verpacken von Gegenständen, die vor Feuchtigkeit oder Staub zu schützen sind) bekannt. Ebenfalls finden solche Verpackungen zum Beispiel im Bereich der Medizintechnik Verwendung.

Unter dem Begriff "Verpackung" ist aber nicht nur ein Beutel wie vorbeschrieben zu sehen, als "Verpackung" kann auch eine Folie dienen, die um das zu verpackende Gut in beliebiger Weise herumgeschlungen oder das Gut darin eingeschlagen wird.

Die für die Beutelherstellung eingesetzte Folie wird im Extrusionsblasverfahren als Endlosschlauch hergestellt. Um dieser Folie die für den speziellen Einsatz als Schrumpffolie benötigten Schrumpfeigenschaften bei Umgebungstemperaturen (Wasser, Luft) von ca. 60° bis 90° Celsius zu verleihen, erfolgt die Herstellung üblicherweise in einem Zwei-Stufen-Prozeß. Ein extrudierter Primärschlauch wird in einem zweiten Prozeßschritt, durch erneute Aufblasung bei Temperaturen unterhalb der Extrusionstemperatur, kalt verstreckt und erhält dadurch die gewünschten Schrumpfeigenschaften. Der Schlauch wird dann mit einem Heizelement in einzelne Teile, Verpackung oder Beutel unterteilt, wobei ein Heizelement eingesetzt wird, welches zumindest die aufeinander aufliegenden Folienflächen miteinander verschweißt und gegebenenfalls auch durchschweißt, um die beiden Verpackungen voneinander zu trennen. Das Abtrennen kann aber auch durch ein mechanisches Reißen erfolgen, wobei dann die Folie im Bereich der durch die Schweißung erfolgten geschwächten Stelle durchtrennt wird. An einer Längsseite wird ein Schnitt als Beutelöffnung eingebracht.

Die wärmeschrumpfende Eigenschaft führt bei der Verschweißung mit notwendigen Temperaturen von über 200° Celsius zu einer Schrumpfung längs der Siegellinie, die zu welligen, schlecht weiterverarbeitbaren beziehungsweise befüllbaren Beuteln führt. Die vorliegende Erfindung hat es sich zur Aufgabe gemacht, eine Verpackung, insbesondere einen Beutel zur Verfügung zu stellen, der leicht weiterverarbeitbar und/oder befüllbar ist.

Durch die erfindungsgemäße Ausgestaltung wird erreicht, daß trotz der Verwendung von wärmeschrumpfendem Kunststoffmaterial Verpackungen erhalten werden, an deren Siegellinien keine merklichen Schrumpfungen auftreten. Dadurch wird eine optisch am Rand glatte Verpackung erreicht, die auch keine Welligkeit besitzt. Die Welligkeiten, wie sie im Stand der Technik bekannt sind, werden durch die durch die Verscheißung notwendige thermische Energieeinbringung in der Folie bewirkt. Obwohl durch technische Auslegungen, zum Beispiel in Form von Kühlteilen, reduzierbar, läßt sich eine Auswirkung der für die Verschweißung eingesetzten beheizten Siegeleinrichtungen in ihrer Hitzeausstrahlung auf Bereiche außerhalb der eigentlichen Schweißung nur unzureichend bzw. aufwendig vermeiden. Dies verstärkt den unerwünschten Schrumpf längs der Schweißnaht zusätzlich. Die erfindungsgemäß ausgestaltete Verpackung ist auch im Randbereich gleichförmig glatt und erleichtert insbesondere den Befüllvorgang und auch die Handhabung. Darüber hinaus wird durch die glatte Ausgestaltung auch die optische Erscheinung deutlich verbessert, die Verpackung sieht ordentlich und zuverlässig aus.

Die Erfindung bezieht sich dabei nicht nur auf die vorgenannten Beutel, sondern kann auch jede andere Form von Folienverpackungen, zum Beispiel Einschlagfolien und so weiter umfassen Als Folienstück werden dabei getrennte Folien oder unterschiedliche Enden einer Folie beziehungsweise eines Folienteils gleichermaßen angesehen.

Als wärmeschrumpfendes Kunststoffmaterial wird dabei eine Kunststofffolie angesehen, die bei einer Wärmebehandlung von ca. 70° C bis 80° C um mindestens 15 % ihrer Abmessungen in mindestens einer Richtung der Folienebene schrumpft. Dabei wird die Kunststofffolie kurze Zeit (weniger als 1 Sec.) in ein Hitzebad mit entsprechender Temperatur gebracht. Die Zeitdauer bestimmt sich dabei im Wesentlichen aus der Wärmeleitfähigkeit des Kunststoffmaterials mit seiner Dicke, wobei eine möglichst durchgängige Erwärmung des Kunststoffmaterials auf die gewünschte Temperatur erreicht werden sollte. Es sind zum Beispiel Folien bekannt, die bei einer Hitzeeinwirkung von 78° C um ca. 20 % und mehr sowohl in Längs- als auch in Querrichtung schrumpfen.

Dabei ist vorgesehen, daß die Erfindung, insbesondere bei ein- oder auch mehrlagigen Kunststofffolien eingesetzt wird, wobei die Kunststofffolie Dicken von 30 µm bis 150 µm, bevorzugt aber von 30 µm bis 80 µm aufweist. Es sind koextrudierte Folien bekannt, bei welchen eine Vielzahl von unterschiedlichen Lagen übereinander angeordnet sind, wobei die verschiedenen Lagen aus unterschiedlichen Materialien bestehen und, entsprechend ihrer physikalischen Eigenschaften, auch unterschiedliche Aufgaben wie zum Beispiel CO₂-Durchlässigkeit, O₂-Barriere, Wasserdampfdurchlässig und so weiter aufweisen. Entsprechend dem Aufbau der diversen Schichten ist es möglich, die Eigenschaften der Kunststofffolie einzustellen und den entsprechenden Eigenschaften des zu verpackenden Gutes optimal anzupassen. Es ist gefunden worden, daß die erfindungsgemäße Lösung nicht nur bei ein- sondern auch bei mehrlagigen Kunststofffolien einsetzbar sind und so den Einsatz der Erfindung in einem weiten Bereich erlaubt.

Dabei ist vorgesehen, daß als Materialien für die verschiedenen Lagen der Kunststofffolie (als ein- oder auch mehrlagige Folie) zum Beispiel Polyethylen (PE), Polyethylen-Copolymere, Ionomere, Ethylenvinylatcetat (EVA), Polyethylene geringer (LDPE) oder hoher Dichte (HDPE), Polypropylen (PP) Verwendung finden können. Es ist auch vorgesehen, zum Beispiel Polyamide (PA), Ethylenvinylalkohole (EVOH) und/ oder Polyvinylidenchlorid (PVDC) als Barrierenmaterial insbesondere bei mehrlagigen Folien einzusetzen.

Dabei ist die Anwendung der Erfindung auch bei anderen für die Kunststofffolienherstellung bekannten Materialien ebenfalls möglich.

Die Verpackung bleibt in einer speziellen Ausgestaltung der Erfindung auch kochfest, indem die Siegelung so gestaltet ist, daß sie bei thermischen Belastungen zwischen 75° und 85° Celsius einsetzbar ist.

Die Erfindung bezieht sich des weiteren auch auf die Verwendung eines stromdurchflossenen, teflonbeschichteten Heizelementes, insbesondere eines metallischen Drahtes, zur Verschweißung von Kunststoffmaterialien zu einer Verpackung oder zu Teilen einer Verpackung. Der Einsatz von Heizelementen zum Verbinden zweier Folienstücke ist bei der Herstellung von beliebigsten Verpackungen hinlänglich bekannt. Die thermoplastischen Eigenschaften der verwendeten Materialien erlauben es, diese mit Heizelementen, Heizspiegel und so weiter zu bearbeiten und entsprechend der Anwendung miteinander zu verbinden oder auch zu trennen. Es ist auch bekannt, Heizelemente zu verwenden, die mit einem Teflontuch überzogen sind, wobei das Teflon, allgemein gesprochen Polytetraflurethylen (PTFE), Anti-Haft-Eigenschaft besitzt, so daß der Kunststoff nicht auf der metallenen Oberfläche des ansonsten ungeschützten Heizelementes anliegt und anklebt, sondern sich leicht davon wieder ablöst. Ein solches Anhaften kann aufgrund der entstehenden Temperaturgradienten leicht erfolgen und zu einer Verschmutzung der entsprechenden Siegelelemente führen. Durch den Einsatz eines direkt teflonbeschichteten Heizelementes wird aber erreicht, daß zum einen die Wärmeübertragung in der Folie an einer exakt definierten Stelle erfolgt und gleichzeitig an dieser Stelle auch eine Anti-Haft-Oberfläche in Form der Teflonbeschichtung vorgesehen ist. Der Einsatz eines so ausgestalteten Heizelementes zur Herstellung von Verpackungen, gegebenenfalls auch der vorbeschriebenen Verpackungen, ergibt daher bei der Produktion dieser Verpackungen einen erheblichen Vorteil im Hinblick auf Produktivität, Qualität, hohen Ausschuß und letztendlich auch das Aussehen der fertigen Verpackung.

Des weiteren bezieht sich die Erfindung auch auf eine Vorrichtung für das thermische Verschweißen von Kunststoffstücken mit Hilfe eine Heizelementes entlang einer Siegellinie, insbesondere zur Herstellung einer Verpackung, zum Beispiel eines Beutels oder einer sonstigen Verpackung.

Bei bekannten Vorrichtungen wurde, wie bereits beschrieben, das Heizelemt, zum Beispiel ein Draht, mit einem Teflongewebe überzogen. Dies führte zu verhältnismäßig breiten Heizflächen, da auch das Teflon, welches nicht direkt am Heizelement anlag (aufgrund des Spannvorganges), ebenfalls das Kunststoffmaterial erhitzt und so zu den bekannten Welligkeiten durch Schrumpf entlang der Siegelkante im Randbereich führte. Die Erfindung hat es sich in diesem Bereich zur Aufgabe gemacht, die Vorrichtung, wie eingangs beschrieben, dahingehend zu verbessern, daß im Ergebnis besser ausgestaltete Beutel auf einfache Art und Weise produziert werden können.

Gelöst wird diese Aufgabe dadurch, daß die der Kunststofffolie zugewandte Heizelementseite eine Beschichtung aus Polatetroflurethylen aufweist. Die Beschichtung ist hierbei auf dem Heizelement direkt, zum Beispiel durch ein Sprühverfahren, aufgebracht. Auf das Aufspannen eines separaten Teflongewebes oder -bandes wird somit verzichtet. Im Ergebnis folgt daraus, daß die Teflonoberfläche mit ihren günstigen, antihaftenden Eigenschaften für Kunststoff genau die gleiche Kontur aufweist wie das Heizelement. Darüber hinaus ist die Beschichtung des Heizelementes mit dem Teflon auch im Hinblick auf die Wärmebilanz von Vorteil, da die thermische Kopplung des mit dem Kunststoffmaterial in Verbindung stehenden Teflons mit dem Heizelement durch die Beschichtung besser ist als bei dem bekannten Überspannen, bei welchem der Teflon nur in einem schmalen linienförmigen Bereich unmittelbar aufliegt und ansonsten durch Strahlungs- oder Konvektionswärme aufzuheizen war. Die daraus resultierenden relativ flachen Temperaturgradienten bei gegebenenfalls hohen Temperaturen führen zu den im Stand der Technik bekannten Welligkeiten.

Die Erfindung beschränkt sich dabei nicht nur auf einen kreisrunden Querschnitt des Heizelementes, sondern kann jede beliebige, zum Beispiel durch einen Fräsvorgang hergestellte Querschnittskontur aufweisen. Es ist zum Beispiel möglich, spitz auslaufende oder länglich ausgebildete Heizelemente auszugestalten.

Von Vorteil ist dabei, daß das Heizelement eine von Strom durchflossene Querschnittsfläche von weniger als 15 mm², bevorzugt weniger als 7 mm² aufweist. Für das Erhitzen des Folienmateriales sind die thermischen Eigenschaften des zu verarbeitenden Folienmateriales zu beachten. Die notwendige Heizenergie wird durch das Heizelement eingeprägt, wobei auch dessen Wärmeleitfähigkeit beziehungsweise Leitvermögen die Bearbeitungszyklen und Taktgeschwindigkeiten bestimmt. Bei verhältnismäßig schmalen Querschnitten ist zum einen eine optimale Aufheizzeit zu realisieren, wobei gleichzeitig eine ausreichende Anlagefläche zur Abgabe der Wärmeenergie an die Kunststofffolie besteht. Dabei wird bevorzugt vorgesehen, daß das Heizelement im Impulsbetrieb aufgeheizt wird, das heißt, in einem Taktzyklus nur für kurze Zeit das Heizelement erhitzt wird und in dieser Zeit den Schneid- und/oder Schweißvorgang an der Folie durchführt.

Weitere bevorzugte Ausgestaltungen der Erfindung sind in Unteransprüchen beschrieben.

Die Erfindung ist schematisch in der Zeichnung dargestellt. Es zeigen:
- Fig. 1 und 2: in einer Draufsicht verschiedene Ausgestaltungen der erfindungsgemäßen Verpackung und
- Fig. 3: in einer Seitenansicht schematisch die Anordnung des Heizelementes auf dem Träger einer erfindungsgemäßen Vorrichtung.

Die Erfindung wird nachfolgend insbesondere an der Ausgestaltung einer als Beutel ausgebildeten Verpackung erläutert werden, wobei die Erfindung in keinster Weise auf diesen Gegenstand zu beschränken ist.

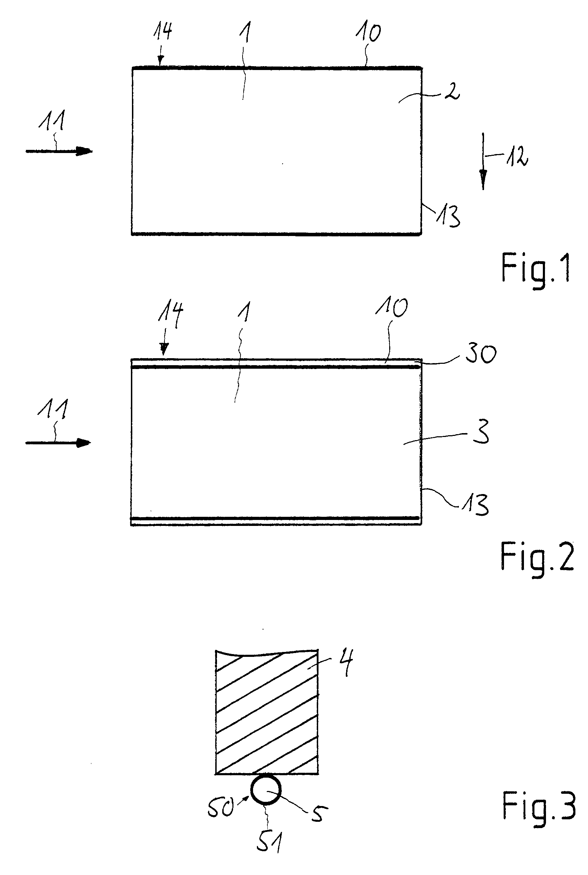

In Fig. 1 ist ein Beutel 1 gezeigt, der als Trennnahtbeutel 2 ausgebildet ist.

In Fig. 2 ist ein Beutel 1 gezeigt, der als Seitenrandbeutel 3 ausgebildet ist.

Durch den Pfeil 11 ist die offene Seite des Beutels angedeutet. Vorbeschriebene Beutel werden im Endlosverfahren in einem Extrusionsverfahren schlauchartig hergestellt. Bei diesem Extrusionsverfahren können in einem Coextrusionsverfahren in einem einzigen Vorgang die verschiedenen Lagen bei einem mehrlagigen Material gleichzeitig hergestellt werden. Die Produktionslaufrichtung bei der Beutelherstellung ist durch den Pfeil 12 angedeutet. Die Förderrichtung und die Öffnung 11 sind rechtwinklig zueinander. Der Schlauch wird gegebenenfalls auf einer Rolle zwischengelagert oder gleich anschließend zu einem Beutel weiterkonfektioniert. Bei dem Schlauchmaterial kommen zwei Folienstücke, nämlich das Schlauchober- und untermaterial aufeinander und bilden im Seitenbereich einen Knick 13. Dieser Knick 13 ist in Förderrichtung 12 längsverlaufend an beiden Seiten. Zum Herstellen der Öffnung 11 wird aber dieser Knick an einer Seite zum Beispiel durch ein Messer aufgeschnitten. Im hierzu rechtwinkligen Randbereich 14 sind die aufeinanderliegenden Folienbahnen, die noch über dem Knick zusammenhängen, zu verbinden, um so die sack- oder beutelartige Verpackung zu erhalten.

Bei der als Trennahtbeutel 2 ausgestalteten Verpackung befindet sich die Siegellinie 10 am äußersten Rand 14 des Beutels 1. Dies ist in Fig. 1 dargestellt. Bei dem als Seitenrandbeutel ausgestaltenten Beutel 1 nach Fig. 2 verbleibt zwischen der Siegellinie 10 und dem Rand 14 ein Seitenrand 30. Insbesondere bei der Ausgestaltung der Erfindung als Trennnahtbeutel 2 wird erreicht, daß die Welligkeit deutlich reduziert wird und eine glatte Oberfläche des verpackten Gutes realisiert wird.

In Fig. 3 ist auf einem Träger 4 das Heizelement 5 schematisch dargestellt. Die Ausgestaltung ist stark vergrößert gewählt. Das Heizelement 5 ist hierbei als teflonbeschichteter Draht 50 ausgebildet. Üblicherweise weist der Draht einen Durchmesser von bis zu 1,5 mm, bevorzugt von 0,8 bis 1,2 mm auf. Der Draht 50 ist durch ein Besprühverfahren auf seiner Außenseite mit einer Teflonbeschichtung 51 ausgestattet. Im Impulsbetrieb wird gerade so viel Hitze erzeugt wie nötig ist, um das endlos vorproduzierte Kunststoffmaterial beziehungsweise Folienmaterial anzuschmelzen, zu verschweißen und gegebenenfalls auch durchzuschmelzen um benachbarte Stücke voneinander zu trennen. Durch geeignete Mittel ist auch vorgesehen, das Heizelement 5 beziehungsweise den Draht 50 auf dem Träger 4 aufzuspannen. Bei einer solchen Ausgestaltung wird dann ein entsprechender, kleiner Abstand zwischen dem Träger 4 und dem Draht 50 gewählt.

Günstig ist dabei, daß der Träger 4 gekühlt ist, zum Beispiel eine Wasserkühlung aufweist. Dadurch wird ein großer Temperaturgradient erzeugt, wobei insbesondere die "kalt abstrahlende" Fläche der der Kunststofffolie zugewandten Trägerseite bewirkt, daß nur in dem Bereich, in welchem die Schweißung vorzunehmen ist, das Folienmaterial auch erwärmt wird. Im Ergebnis wird die erfindungsgemäße Verpackung erreicht, bei welcher ein minimaler Schrumpf entlang der Siegellinie 10 besteht, wodurch eine sehr brauchbare Verpackung erreicht wird. Gleichzeitig ist die Anordnung aber auch so gewählt, daß dadurch eine höhere Taktzeit möglich ist, da in kürzerer Zeite eine zuverlässigere und auch optisch hervorragende Schweißnaht erzielt wird.

Es ist dabei gefunden worden, daß die Schrumpfung nur in einem schmalen Bereich entlang der Siegellinie auftritt, wobei der schmale Bereich insbesondere ein Bereich ist, der bevorzugt kleiner ist als 50 mal die Breite der Siegellinie, insbesondere 5 bis 20 mal kleiner als die Breite der Siegellinie. Im Gegenzug dazu sind bei Verschweißungen gemäß dem Stand der Technik Schrumpfungen auch im Außenbereich hierzu gefunden worden, die eben zu den unerwünschten Welligkeiten im Randbereich führten.

Insbesondere die Realisierung von auch im Randbereich glatten, nicht welligen Trennnahtbeuteln, wie nach Fig. 1, erlaubt einen noch sparsameren Einsatz des Kunststoffmateriales und eine Reduzierung von Ausschuß und Verpackungsvolumen.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

## Patentansprüche

1. Verpackung, insbesondere Beutel, oder Teile der Verpackung aus wärmeschrumpfendem Kunststofffolienmaterial, wobei an der Verpackung eine Siegellinie vorgesehen ist, an welcher zwei Folienstücke der Verpackung durch Verschweißung miteinander verbunden sind und wobei das Folienmaterial in einem schmalen Bereich entlang der Siegellinie um weniger als 5 %, bevorzugt um weniger als 2 % seiner Abmessung geschrumpft ist.

2. Verpackungen nach Anspruch 1, **durch gekennzeichnet, daß** die Verpackung als Schrumpfbeutel, insbesondere als Trennaht- oder als Seitenrandbeutel ausgebildet ist.

3. Verpackung nach einem oder beiden der vorhergehenden Ansprüche, **dadurch gekennzeichnet, daß** die Kunststoffolie bei 70°C bis 80°C um mindestens 15 % ihrer Abmessungen in mindestens einer Richtung der Folienebene schrumpft.

4. Verpackung nach einem oder mehreren der vorhergehenden Ansprüche, **dadurch gekennzeichnet, daß** die Kunststofffolie eine Dicke von 30 µm bis 150 µm, bevorzugt von 30 µm bis 80 µm aufweist.

5. Verpackung nach einem oder mehreren der vorhergehenden Ansprüche, **dadurch gekennzeichnet, daß** die Kunststofffolie ein- oder mehrlagig ausgebildet ist.

6. Verpackung nach einem oder mehreren der vorhergehenden Ansprüche, **dadurch gekennzeichnet, daß** die Lage der Kunststofffolie aus Polyethylen (PE), Polyethylen-Copolymere, Ionomere, Ethylenvinylacetat (EVA), Polyethylene geringer Dichte (LDPE), Polypropylene (PP), Polyamide (PA), Ethylenvinylalkohole (EVOH) Polyethylene hoher Dichte (HDPE) und/oder Polyvinylidenchlorid (PVDC) besteht.

7. Verpackung nach einem oder mehreren der vorhergehenden Ansprüche, **dadurch gekennzeichnet, daß** die Verpackung, insbesondere die Siegellinie kochfest ist.

8. Verwendung eines stromdurchflossenen, teflonbeschichteten Heizelementes, insbesondere eines metallischen Drahtes zur Verschweißung von Kunststoffmaterialien zu einer Verpackung oder zu Teilen einer Verpackung, insbesondere nach einem der vorhergehenden Ansprüche.

9. Vorrichtung für das thermische Verschweißen von Kunststoffstücken mit Hilfe eines Heizelementes entlang einer Siegellinie, insbesondere zur Herstellung einer Verpackung, wie einem Beutel oder dergleichen, **dadurch gekennzeichnet, daß** zumindest die der Kunststofffolie zugewandte Heizelementseite eine Beschichtung aus Polytetraflurethylen (PTFE, Teflon) aufweist.

10. Vorrichtung nach Anspruch 9, **dadurch gekennzeichnet, daß** das Heizelement eine von Strom durchflossene Querschnittsfläche von weniger als 15 mm², bevorzugt weniger als 7 mm² aufweist.

11. Vorrichtung nach einem oder beiden der Ansprüche 9 und 10, **dadurch gekennzeichnet, daß** das Heizelement im Impulsbetrieb aufgeheizt wird.

12. Vorrichtung nach einem oder mehreren der Ansprüche 9 bis 11, **dadurch gekennzeichnet, daß** das Heizelement auf einem Träger vorgesehen ist und das Heizelement insbesondere als auf dem Träger aufgespannter Draht ausgebildet ist.

13. Vorrichtung nach einem oder mehreren der Ansprüche 9 bis 12, **dadurch gekennzeichnet, daß** der Träger gekühlt ist.
